# EUROPEAN PATENT SPECIFICATION

(11) **EP 1 180 670 B1**
(45) Date of publication and mention of the grant of the patent: **14.04.2010**
(21) Application number: 01119236.6
(22) Date of filing: 09.08.2001
(51) Int. Cl.: G01K 13/02

(54) **Temperature sensor mounting structure**
Struktur zur Montage eines Temperaturfühlers
Structure de montage d'un capteur de température

(30) Priority: 11.08.2000 JP 2000244613; 29.06.2001 JP 2001199121
(43) Date of publication of application: 20.02.2002
(73) Proprietor: DENSO CORPORATION, Kariya-city, Aichi-pref. 448-8661 (JP)
(72) Inventor: Shibayama, Susumu, c/o Denso Corporation, Kariya-city, Aichi-pref. 448-8661 (JP)
(74) Representative: TBK-Patent

(56) References cited:
- DE-A- 4 021 997
- DE-A- 10 034 265
- PATENT ABSTRACTS OF JAPAN vol. 017, no. 070 (P-1485), 12 February 1993 (1993-02-12) -& JP 04 276530 A (MATSUSHITA ELECTRIC IND CO LTD), 1 October 1992 (1992-10-01)
- PATENT ABSTRACTS OF JAPAN vol. 1997, no. 09, 30 September 1997 (1997-09-30) -& JP 09 126910 A (MATSUSHITA ELECTRIC IND CO LTD), 16 May 1997 (1997-05-16)

## Description

### BACKGROUND OF THE INVENTION

### 1. Field of the Invention

The present invention relates to a mounting structure, for a temperature sensor for detecting the temperature of fluid flowing through a tube according to the preamble of claim 1, and the mounting structure according to the present invention is effective when applied to a mounting structure for an exhaust gas temperature sensor for detecting the temperature of exhaust gas discharged from a heat engine such as an internal combustion engine.

### 2. Description of the Related Art

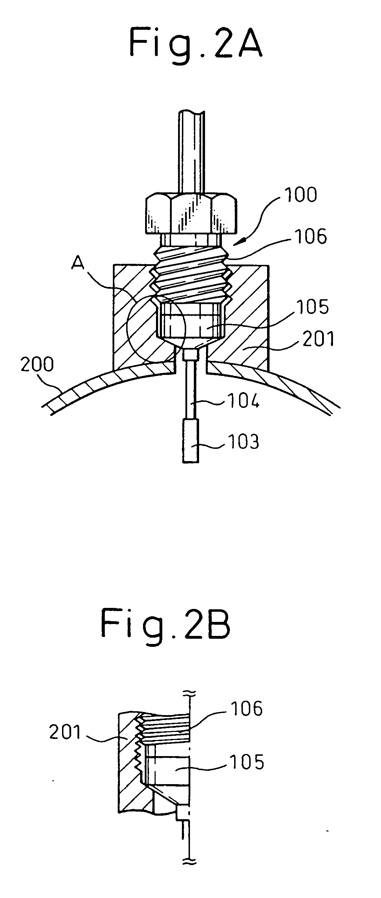

Fig. 2A is a typical diagram showing the mounting structure of a temperature sensor (an exhaust gas temperature sensor) 100, and Fig. 2B is an enlarged view of a portion A in Fig. 2A. The temperature sensor 100 is fixedly threaded to a boss portion 201 welded to an exhaust pipe 200.

Here, in Fig. 2A, reference numeral 103 denotes a cover for protecting a sensor main body such as a thermistor, and reference numeral 104 denotes a sheath pin for protecting a sheath pin core wire which is electrically joined to the sensor main body. In addition, reference numeral 105 denotes a rib adapted to be brought into contact with the boss portion 201 for preventing exhaust gas from leaking from a portion where the temperature sensor 100 is mounted to the outside, and this rib 105 is joined to the sheath pin 104.

Then, a nipple nut 106 having external threads formed thereon is thread fastened to an internal thread portion of the boss portion 201, so that the rib 105 is pressed against the boss portion 201, whereby the rib 105 and the boss portion 201 are tightly secured to each , other, and the temperature sensor 100 is also fixedly mounted on the boss portion 201(the exhaust pipe 200).

In this construction, conventionally, the nipple nut 106 is formed of a material having a coefficient α of linear thermal expansion which is larger than that of the boss portion 201 so that the fastening force (the clamping force) between the nipple nut 106 and the boss portion 201 is prevented from decreasing by virtue of thermal expansion of the nipple nut 106.

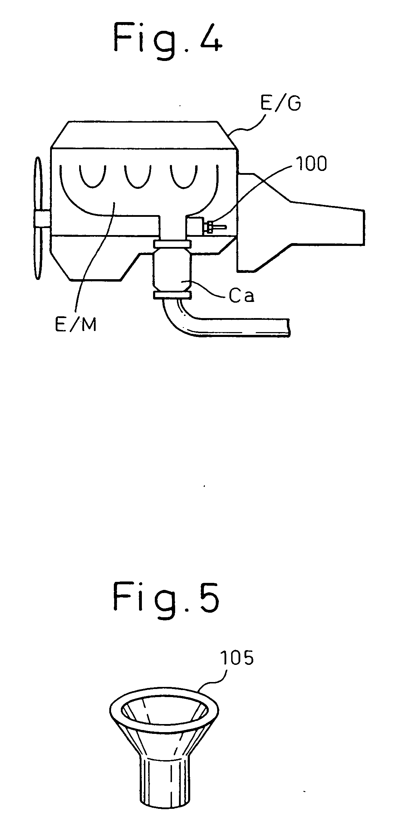

Incidentally, in recent years, as shown in Fig. 4, a means has been adopted in which a catalytic converter Ca is provided closer to an exhaust side of an engine E/G so as to activate the catalytic converter Ca at an earlier stage to thereby enhance the exhaust gas purifying efficiency of the catalytic converter Ca and, in this means, the exhaust gas temperature sensor 100 needs to be mounted in the vicinity of the exhaust side of the engine.

Conventionally, the exhaust gas temperature sensor is mounted in the boss portion 201 which is heated up to in the order of 400 degrees °C. Due to the adoption of the close coupled catalytic converter, however, in recent years, the exhaust gas temperature sensor is mounted in the boss portion 201 which is heated to or to move than 600 degrees °C, and this makes the thermal deformations (thermal expansions and contractions) of the boss portion 201, the rib 105 and the nipple nut 106 larger than those conventionally exhibited, and with the conventional means in which the nipple nut 106 is formed of the material having the coefficient α of linear thermal expansion which is larger than that of the boss portion 201, stress which is greater than the yield stress may be produced in at least one of the boss portion 201, the rib 105 and the nipple nut 106, there thus being a possibility that any of the boss portion 201, the rib 105 and the nipple nut 106 is plastically deformed.
Thus, in the event that any of the boss portion 201, the rib 105 and the nipple nut 106 is plastically deformed, it is impossible to prevent the lowering of the fastening force between the nipple nut 106 and the boss portion 201, and this may lead to a risk of causing a problem that the nipple nut 106 (at the threaded portion) becomes loose. Hereinafter, the problem is referred to as "loosening of threads due to a hot-cold cycle".
According to the closest prior art disclosed in DE 40 21 997 A, a mounting structure for a temperature sensor for detecting the temperature of a fluid flowing within a tube is provided. The mounting structure comprises a mounting seat provided on the tube and having a threaded portion formed therein for mounting said temperature sensor, a sealing member joined to said temperature sensor and adapted to be brought into contact with said mounting seat to thereby prevent fluid from leaking from a portion, where said temperature sensor is inserted, to the outside and a fixing member adapted to be brought into threaded connection with said threaded portion in such a manner that the sealing member is pressed against the mounting seat.
According to the prior art disclosed in JP 04 276530 A, a similar structure for mounting a temperature sensor is disclosed.
It is the object of the present invention to provide a mounting structure for a temperature sensor which prevents the loosening of threads due to a hot-cold cycle
The object is solved by a mounting structure for a temperature sensor having the combination of the features of claim 1. Further advantageous developments of the present invention are defined in the dependent claims.

According to an aspect of the present invention, there is provided a mounting structure for a temperature sensor (100) for detecting the temperature of fluid flowing within a tube (200), the mounting structure having a mounting seat (201) provided on the tube (200) and having a thread portion (202) formed therein for mounting the temperature sensor (100), a sealing member (105) joined to the temperature sensor (100) and adapted to be brought into contact with the mounting seat (201) to thereby prevent fluid from leaking from a portion, where the temperature sensor (100) is inserted, to the outside and a fixing member (106) adapted to be brought into thread connection with the thread portion (202) in such a manner as to press the sealing member (105) against the mounting seat (201), whereby the mounting seat (201), the sealing member (105) and the fixing member (106) are constructed such that the thermal deformations thereof become substantially the same.

According to this construction, even if the thermal deformations (thermal expansions and contractions) are larger than those of the conventional structure, since the mounting seat (201), the sealing member (105) and the fixing member (106) are thermally expanded or contracted substantially all together, the loosening of threads due to a hot-cold cycle can be prevented.

According to another aspect of the present invention, there is provided a mounting structure for a temperature sensor as set forth in the aforesaid aspect of the present invention, wherein, the temperature sensor (100) has a sensor portion (101) for sensing temperature, a sheath pin core wire (102) electrically connected to the sensor portion (101) and a cylindrical sheath pin (104) for covering the sheath pin core wire (102), wherein the sealing member (105) is joined to the sheath pin (104), wherein the sheath pin (104) is covered with a cylindrical protection tube (107), wherein a rubber bush (110) is fixed to the protection tube (108) for holding and fixing a lead wire (109) electrically connected to the sheath pin core wire (102), and wherein the sheath pin (104) is fixed to the protection tube (107).

According to the construction, because resonance of the sheath pin (104) can be prevented, the protection tube (107) can be made longer.

Consequently, because the fixing position of the bush (110) can be kept as far away from the tube (200) as possible, the bush (110) is prevented from being heated, by heat conducted to the bush (110) via the protection tube (107), to a temperature exceeding the maximum temperature of the bush (110) over which the heat resistance of the bush (110) is deteriorated, whereby the reliability (durability) of the temperature sensor (100) can be improved.

Reference numerals in parentheses imparted to the aforesaid means are examples intended to denote corresponding relationships with specific means described in the description of the preferred embodiments of the present invention, which follow.

The present invention will be more fully understood with reference to the accompanying drawings and the preferred embodiments of the invention.

### BRIEF DESCRIPTION OF THE DRAWINGS

In the drawings:
Fig. 1 is a cross-sectional view of an exhaust gas temperature sensor (a temperature sensor) for use in a temperature sensor mounting structure according to a first embodiment of the present invention;
Fig. 2A is a typical diagram showing a temperature sensor mounting structure according to the first embodiment of the present invention, Fig 2B being an enlarged view of a portion A in Fig. 2A;
Fig. 3 is a cross-sectional view of an exhaust pipe for use in the temperature mounting structure according to the first embodiment of the present invention;
Fig. 4 is a typical diagram of an engine exhaust system to which the temperature mounting structure according to the first embodiment of the present invention is applied;
Fig. 5 is a perspective view of a rib for use in a temperature sensor mounting structure according to a fourth embodiment of the present invention;
Figs. 6A to 6C are cross-sectional views of a protection tube for an exhaust gas temperature sensor for use in a temperature sensor mounting structure according to a fifth embodiment of the present invention;
Fig. 7 is a perspective view of an exhaust gas temperature sensor for use in a temperature sensor mounting structure according to a sixth embodiment of the present invention;
Fig. 8 is a perspective view of an exhaust gas temperature sensor for use in a temperature sensor mounting structure according to a seventh embodiment of the present invention; and
Fig. 9 is a perspective view of an exhaust gas temperature sensor for use in a temperature sensor mounting structure according to an eighth embodiment of the present invention.

### DESCRIPTION OF THE PREFERRED EMBODIMENTS

### (First Embodiment)

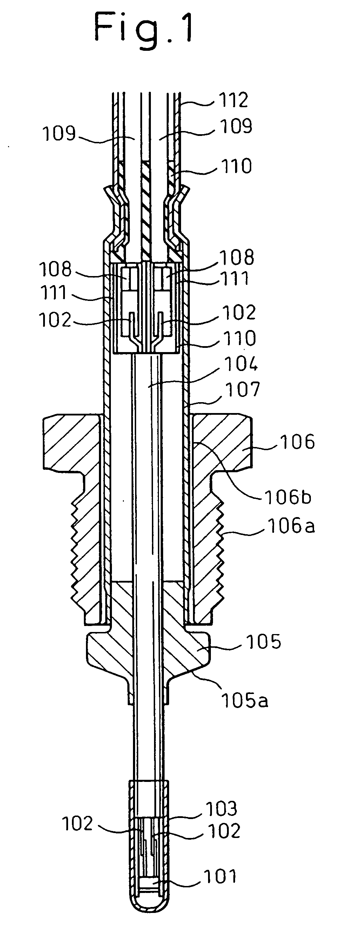

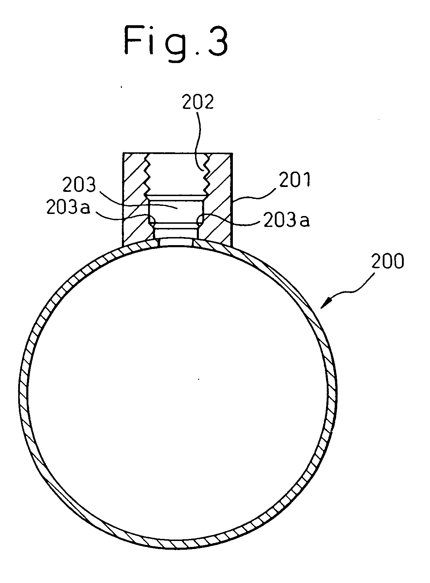

In this embodiment, a temperature sensor mounting structure according to the present invention is applied to a mounting structure of an exhaust gas temperature sensor 100 for detecting the temperature of exhaust gases discharged from an automotive engine (an internal combustion engine). Fig. 1 is a typical diagram of the exhaust gas temperature sensor 100, Fig. 2A is a typical diagram showing a state in which the exhaust gas temperature sensor 100 is mounted in an exhaust pipe 200, and Fig. 3 is a cross-sectional view of a portion where the exhaust gas temperature sensor is mounted.

In addition, Fig. 4 is a typical diagram showing a state in which the exhaust gas temperature sensor 100 is mounted on a vehicle, and the exhaust gas temperature sensor 100 is mounted in the vicinity of a location where exhaust tubes of an exhaust manifold E/M of the engine (heat engine) E/G are collected. Reference character Ca denotes a three-way catalytic converter for purifying exhaust gases by promoting the oxidation-reduction reaction of exhaust gases.

In Fig. 1, reference numeral 101 denotes a sensor main body such as a thermistor which is exposed to exhaust gases flowing within the exhaust pipe 200 for sensing the temperature of exhaust gas, and reference numeral 102 denotes a sheath pin core wire electrically connected to the sensor main body 101.

Reference numeral 103 denotes a sensor cover for covering the sensor main body 101, and reference numeral 104 denotes a cylindrical sheath pin for covering the sheath pin core wire 102. The exhaust temperature sensor 100 is constituted by the sensor main body 101, the sheath pin core wire 102 and the sheath pin 104.

In Figs. 2A and 3, reference numeral 201 denotes a boss portion (a mounting seat) welded to the exhaust pipe 200 for mounting the exhaust gas temperature sensor 100, and a through hole 203 penetrating to the interior of the exhaust pipe 200 is formed in the boss portion 201 by making use of a prepared hole formed in the boss portion 201 when forming an internal thread portion 202.

On the other hand, a rib (a sealing member) 105 is joined to the sheath pin 104 of the exhaust gas sensor 100 by brazing or welding, and formed on the rib 105 is a conical tapered surface 105a adapted to be brought into contact with a tapered portion 203a (refer to Fig. 3) of the through hole (prepared hole) 203, as shown in Fig. 1, for preventing exhaust gas from leaking from the through hole 203, into which the exhaust gas temperature sensor 100 is inserted, to the outside.

In addition, reference numeral 106 denotes a nipple nut (a fixing member) having formed thereon an external thread portion 106a for threaded connection to the internal thread portion 202 of the boss portion 201, and formed in this nipple nut 106 is an insertion hole 106b into which a cylindrical protection tube 107 for covering the sheath pin 104 is inserted.

In addition, the protection tube 107 is joined to the rib 105 through brazing or welding, and the nipple nut 106 is allowed to slide in longitudinal directions relative to the protection tube 107.

Then, in mounting the exhaust gas temperature sensor 100 in the boss portion 201 (the exhaust pipe 200), with the tapered portion 105a of the rib 105 being in contact with the tapered portion 203a of the through hole (prepared hole) 203, the nipple nut 106 is screwed (tightened) into the boss portion 201, so that the exhaust gas temperature sensor 100 is fixed to the boss portion 201 (the exhaust pipe 200) while pressing the tapered portion 105a against the tapered portion 203a by virtue of fastening force (clamping force) generated while the nipple nut 106 is so screwed into the boss portion 201.

In addition, in this embodiment, the coefficients α of linear thermal expansion of the rib 105, the nipple nut 106 and the boss portion 201 are made substantially the same so that the thermal deformations (thermal expansions and contractions) of the rib 105, the nipple nut 106 and the boss portion 201 become substantially the same.

To be specific, the boss portion 201 and the rib 105 are formed of SUS304 (American Iron and Steel Institute AISI 304) to Japanese Industrial Standards (JIS) (α=18.9×10⁻⁶/°C) and the nipple nut 106 is formed of SUSXM7 (American Society for Testing and Material ASTM XM7) to JIS (α=18.7×10⁻⁶/°C). Incidentally, in this embodiment, the protection tube 107 is also formed of SUS 304.

In addition, in Fig. 1, reference numeral 108 denotes a connector for electrically connecting a lead wire 109 with the sheath pin core wire 102, and reference numeral 110 denotes a rubber or resin bush for holding and fixing the lead wire 109. This bush 110 is fixed in the protection tube 107 by plastically deforming (caulking) the protection tube 107 in such a manner as to reduce the inside diameter of thereof.

In addition, reference numeral 111 denotes an insulation tube made from tetrafluoroethylene (Teflon: Trade mark) for preventing the connector 108 from coming into contact with the protection tube 107.

Next, features of the embodiment will be described.

According to this embodiment, since the rib 105, the nipple nut 106 and the boss portion 201 are constructed so that the thermal deformations (thermal expansions and contractions) thereof become substantially the same by making the coefficients α of linear thermal expansion of the rib 105, the nipple nut 106 and the boss portion 201 substantially the same, even if the thermal deformations (thermal expansions and contractions) are made larger than those of the conventional means, the rib 105, the nipple nut 106 and the boss portion 201 are thermally expanded and/or contracted substantially all together. Consequently, the loosening of threads due to a hot-cold cycle can be prevented.

In addition, since the rib 105, the nipple nut 106 and the boss portion 201 are formed of stainless steel which is a metal having superior anti-oxidization properties, the corrosion thereof can be prevented to thereby improve the reliability (durability) of the temperature sensor 100.

Additionally, in this embodiment, since the rib 105, the nipple nut 106 and the boss portion 201 are constructed so that the thermal deformations (thermal expansions and contractions) thereof become substantially the same by making the coefficients α of linear thermal expansion of the rib 105, the nipple nut 106 and the boss portion 203 substantially the same, it is desirable that the difference in coefficients of linear thermal expansion (a difference between the maximum coefficient of linear thermal expansion and the minimum coefficient of linear thermal expansion) is 2×10⁻⁶/°C or less.

### (Second Embodiment)

While the rib 105, the nipple nut 106 and the boss portion 201 are formed of austenite stainless steel in the first embodiment, in this second embodiment, the rib 105, the nipple nut 106 and the boss portion 201 are formed of ferrite stainless steel. To be specific, the boss portion 201 is formed of SUS 430 (American Iron and Steel Institute AISI 430) to JIS, the rib 105 from SUS 430 and the nipple nut 106 from SUS 430.

### (Third Embodiment)

In this embodiment, the rib 105, the nipple nut 106 and the boss portion 201 are formed of martensite stainless steel. To be specific, the rib 105, the nipple nut 106 and the boss portion 201 are formed of SUS 410 (AISI 410) to JIS.

### (Fourth Embodiment)

Since the coefficient α of linear thermal expansion is the coefficient of expansion of a material relative to change in unit temperature, even if the coefficients of linear thermal expansion are equal, the sizes of the rib 105, the nipple nut 106 and the boss portion 201 are largely different, there may occur a case in which the thermal deformations (thermal expansions and contractions) do not become substantially the same due to the temperature distributions of the materials. In addition, there may be a case in which selecting materials having substantially the same coefficients of linear thermal expansion is difficult.

To cope with the drawbacks, in this embodiment, as shown in Fig. 5, the size of the rib 105 is reduced so as to reduce the thermal deformation (thermal expansion and contraction) of the rib 105, so that the deformations (thermal expansions and contractions) of the rib 105, the nipple nut 106 and the boss portion 201 become substantially the same.

In this embodiment, a pipe material is flared (pressed) so as to form the rib 105.

In addition, in this embodiment, while the size of the rib 105 is reduced so as to reduce the thermal deformation (thermal expansion and contraction) of the rib 105, so that the deformations (thermal expansions and contractions) of the rib 105, the nipple nut 106 and the boss portion 201 become substantially the same, in this embodiment, the size of at least one of the rib 105, the nipple nut 106 and the boss portion 201 is adjusted, so that the deformations (thermal expansions and contractions) of the rib 105, the nipple nut 106 and the boss portion 201 become substantially the same. However, the embodiment is not limited to this, and for example, the size of the rib 105 may be increased.

### (Fifth Embodiment)

Since the exhaust gas temperature sensor 100 is mounted in the vicinity of the location where the exhaust tubes of the exhaust manifold E/M are collected, the temperature of the sensor reaches 500 to 700 degrees °C. Due to this, since heat is conducted to the bush 110 via the protection tube 107, there occurs a case where the temperature of the bush 110 exceeds the heat resistant limit temperature (about 200 degrees °C) of the bush 110 (rubber or resin).

To cope with this problem, the fixing position of the bush 110 is separated as far away from the rib 105 as possible by extending the length of the protection tube 107, but when the protection tube 107 is extended, the sheath pin 104 also has to be extended, and therefore the sheath pin 104 may resonate as the vehicle vibrates (vibrations of the engine), leading to a risk of the sheath pin 104 failing due to fatigue.

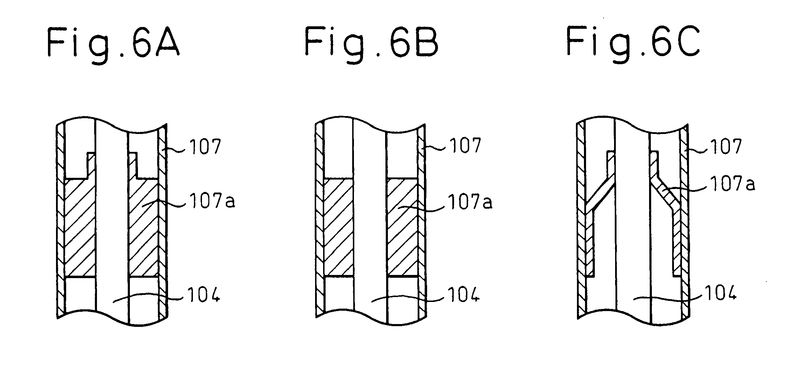

To cope with this problem, in this embodiment, as shown in Figs. 6A to 6C, the resonance of the sheath pin 104 is prevented by providing a bracket (a spacer ring) 107a for fixing the sheath pin 104 to the protection tube 107 and the length of the protection tube 107 is extended so that the fixing position of the bush 110 is separated as far away from the rib 105 as possible.

Consequently, since the bush 110 is prevented from being heated by heat conducted thereto via the protection tube 107 so that the temperature of the bush 110 does not exceed the heat resistant limit temperature thereof, the reliability (durability) of the exhaust gas temperature sensor 100 can be improved.

In addition, Fig. 6A shows a construction in which a stepped block-like bracket 107a is jointed to the sheath pin 104 and the protection tube 107 through caulking or welding (brazing), Fig. 6B shows a construction in which a cylindrical block-like bracket 107a is joined to the sheath pin 104 and the protection tube 107 through caulking, and Fig. 6C shows a construction in which an umbrella-like bracket 107a is joined to the sheath pin 104 and the protection tube 107 through caulking or welding (brazing).

While only a single bracket 107a is used in this embodiment, a plurality of brackets 107a may be provided and, if this occurs, it is desirable that the brackets are provided at intervals of about 25mm.

### (Sixth Embodiment)

By the way, when the protection tube 107 is extended, there is a risk that the protection tube 107 may interfere with equipment mounted in the vicinity of the exhaust gas temperature sensor 100.

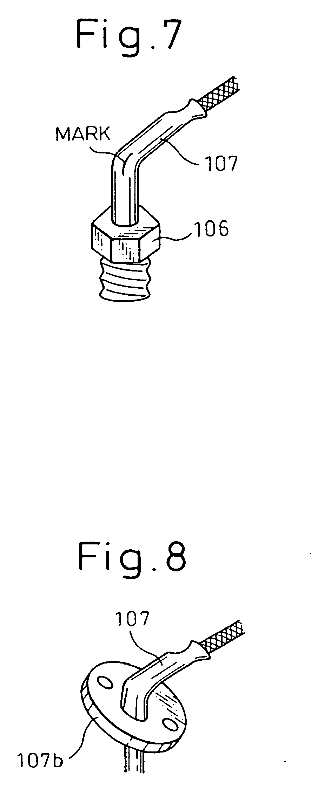

To cope with this problem, in this embodiment, the interference of the protection tube 107 with the equipment mounted in the vicinity of the exhaust gas temperature sensor 100 can be prevented by bending, in advance, the protection tube 107, as shown in Fig. 7 and, moreover, a mark indicating a mounting direction may be applied to the protection tube 107 so to prevent the occurrence of an error in assembling the exhaust gas temperature sensor 100.

### (Seventh Embodiment)

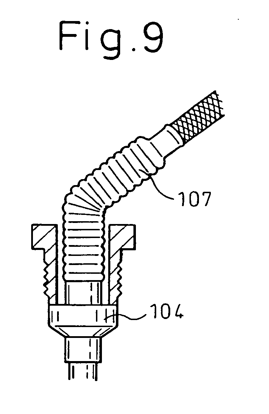

In this embodiment, the protection tube 107 is extended as a flexible tube having a certain flexibility, as shown in Fig. 9, and a bracket 107a is provided for fixing the sheath pin 104 to the protection tube 107.

### (Other Embodiments)

While the present invention has been described as being applied to the mounting structure for the exhaust gas temperature sensor in the embodiments, the present invention is not limited thereto, but may be applied to mounting structures for other temperature sensors.

In addition, in the above embodiments, while the rib 105, the nipple nut 106 and the boss portion 201 are formed of metal of stainless steel system, the present invention is not limited thereto, and those constituent members may be formed from other metals or other materials (such as ceramics).

In addition, in the above embodiments, while the internal thread portion is provided on the boss portion 201 and the external thread portion is provided on the nipple nut 106, contrary to this, the external thread portion may be provided on the boss portion 201 and the internal thread portion may be provided on the nipple nut 106.

The thermal deformations (thermal expansions and contractions) of a rib 105, a nipple nut 106 and a boss portion 201 are made substantially the same by making the coefficients of linear thermal expansion thereof substantially the same. According to the construction, even if an exhaust gas temperature sensor 100 is disposed in the vicinity of an exhaust manifold whereby the thermal deformations (thermal expansions and contractions) of the rib 105, the nipple nut 106 and the boss portion 201 are large, since the rib 105, the nipple nut 106 and the boss portion 201 are thermally expanded and/or contracted substantially all together, the loosening of threads due to a hot-cold cycle can be prevented.

## Claims

1. A mounting structure for a temperature sensor (100) for detecting the temperature of fluid flowing within a tube (200), said mounting structure comprising a mounting seat (201) provided on said tube (200) and having a threaded portion (202) formed therein for mounting said temperature sensor (100), a sealing member (105) joined to said temperature sensor (100) and adapted to be brought into contact with said mounting seat (201) to thereby prevent fluid from leaking from a portion, where said temperature sensor (100) is inserted, to the outside and a fixing member (106) adapted to be brought into threaded connection with said threaded portion (202) in such a manner as to press said sealing member (105) against said mounting seat (201),
**characterized in that**
said mounting seat (201), said sealing member (105) and said fixing member (106) are constructed such that the thermal deformations thereof become substantially the same by making the coefficients of linear thermal expansion of said mounting seat (201), said sealing member (105) and said fixing member (106) substantially the same,
wherein the difference in coefficients of linear thermal expansion of said mounting seat (201), said sealing member (105) and said fixing member (106) is 2x10⁻⁶/°C or less.

2. A mounting structure for a temperature sensor (100) according to claim 1, wherein the fluid flowing within said tube (200) is exhaust gases discharged from a heat engine, and wherein said mounting seat (201), said sealing member (105) and said fixing member (106) are formed of metal.

3. A mounting structure for a temperature sensor (100) according to claim 2, wherein said metal is a metal having anti-oxidization properties.

4. A mounting structure for a temperature sensor (100) according to claim 2, wherein said mounting seat (201), said sealing member (105) and said fixing member (106) are exposed to an atmosphere at a temperature of 500°C to 700°C.

5. A mounting structure for a temperature sensor (100) according to claim 1, wherein fluid flowing within said tube (200) is exhaust gases discharged from a heat engine, and wherein said mounting seat (201) and said sealing member (105) are formed of SUS 304 (AISI 304) to JIS and said fixing member (106) is formed of SUS XM 7 (ASTM XM7) to JIS.

6. A mounting structure for a temperature sensor (100) according to claim 1, wherein fluid flowing within said tube (200) is exhaust gases discharged from a heat engine, and wherein said mounting seat (201) is formed of SUS430, said sealing member (105) is formed of SUS 430 (AISI 430) of JIS and said fixing member (106) is formed of SUS 430.

7. A mounting structure for a temperature sensor (100) according to claim 1, wherein fluid flowing within said tube (200) is exhaust gases discharged from a heat engine, and wherein said mounting seat (201), said sealing member (105) and said fixing member (106) are formed of SUS 410 (AISI 410) to JIS.

8. A mounting structure for a temperature sensor (100) according to claim 1, wherein said temperature sensor (100) has a sensor portion (101) for sensing temperature, a sheath pin core wire (102) electrically connected to said sensor portion (101) and a cylindrical sheath pin (104) for covering said sheath pin core wire (102), wherein said sealing member (105) is joined to said sheath pin (104), wherein said sheath pin (104) is covered with a cylindrical protection tube (107), wherein a rubber bush (110) is fixed to said protection tube (107) for holding and fixing a lead wire (109) electrically connected to said sheath pin core wire (102), and wherein said sheath pin (104) is fixed to said protection tube (107).

## Patentansprüche

1. Montageanordnung für einen Temperatursensor (100) zum Erfassen der Temperatur eines Fluids, das in einer Röhre (200) strömt, wobei die Montageanordnung einen Montagesitz (201), der an der Röhre (200) vorgesehen ist und einen Schraubabschnitt (202) hat, der zum Montieren des Temperatursensors (100) darin ausgebildet ist, ein Dichtbauteil (105), das an den Temperatursensor (100) gefügt ist und angepasst ist, um in Kontakt mit dem Montagesitz (201) gebracht zu werden, um **dadurch** Fluid vom Auslaufen von einem Abschnitt, an dem der Temperatursensor (100) eingesetzt ist, nach außen hin zu verhindern, und ein Befestigungsbauteil (106) aufweist, das angepasst ist, um mit dem geschraubten Abschnitt (202) in solch einer Art und Weise in eine Schraubverbindung gebracht zu werden, um das Dichtbauteil (105) gegen den Montagesitz (201) zu drücken,
**dadurch gekennzeichnet, dass**
der Montagesitz (201), das Dichtbauteil (105) und das Befestigungsbauteil (106) derart aufgebaut sind, dass durch ein im Wesentlichen Anpassen der Koeffizienten einer linearen thermalen Ausdehnung des Montagesitzes (201) des Dichtbauteils (105) und des Befestigungsbauteils (106) die thermischen Deformationen von diesen im Wesentlichen die gleichen werden,
wobei der Koeffizientenunterschied einer linearen thermalen Ausdehnung des Montagesitzes (201), des Dichtbauteils (105) und des Befestigungsbauteils (106) 2x10⁻⁶/°C oder weniger ist.

2. Montageanordnung für einen Temperatursensor (100) nach Anspruch 1, wobei das Fluid, das innerhalb der Röhre (200) strömt, Abgas ist, das von einer Wärmemaschine abgegeben ist, und wobei der Montagesitz (201), das Dichtbauteil (105) und das Befestigungsbauteil (106) aus Metall ausgebildet sind.

3. Montageanordnung für einen Temperatursensor (100) nach Anspruch 2, wobei das Metall ein Metall mit Antioxidationseigenschaften ist.

4. Montageanordnung für einen Temperatursensor (100) nach Anspruch 2, wobei der Montagesitz (201), das Dichtbauteil (105) und das Befestigungsbauteil (106), einer Atmosphäre bei einer Temperatur von 500°C bis 700°C ausgesetzt sind.

5. Montageanordnung für einen Temperatursensor (100) nach Anspruch 1, wobei ein Fluid, das innerhalb der Röhre (200) strömt, Abgas ist, das von einer Wärmemaschine abgegeben ist, und wobei der Montagesitz (201) und das Dichtbauteil (105) aus SUS 304 (AISI 304) gemäß JIS ausgebildet sind und das Befestigungsbauteil (106) aus SUS XM 7 (ASTM XM7) gemäß JIS ausgebildet ist.

6. Montageanordnung für einen Temperatursensor (100) nach Anspruch 1, wobei ein Fluid, das innerhalb der Röhre (200) strömt, Abgas ist, das von einer Wärmemaschine abgegeben ist, und wobei der Montagesitz (201) aus SUS 430 ausgebildet ist, das Dichtbauteil (105) aus SUS 430 (AISI 430) gemäß JIS ausgebildet ist und das Befestigungsbauteil (106) aus SUS 430 ausgebildet ist.

7. Montageanordnung für einen Temperatursensor (100) nach Anspruch 1, wobei ein Fluid, das innerhalb der Röhre (200) strömt, Abgas ist, das von einer Wärmemaschine abgegeben ist, und wobei der Montagesitz (201), das Dichtbauteil (105) und das Befestigungsbauteil (106) aus SUS 410 (AISI 410) gemäß JIS ausgebildet sind.

8. Montageanordnung für einen Temperatursensor (100) nach Anspruch 1, wobei der Temperatursensor (100) einen Sensorabschnitt (101) zum Fühlen einer Temperatur, einen Mantelstiftkerndraht (102), der mit dem Sensorabschnitt (101) elektrisch verbunden ist, und einen zylindrischen Mantelstift (104) zum Abdecken des Mantelstiftkerndrahts (102) aufweist, wobei das Dichtbauteil (105) mit dem Mantelstift (104) verbunden ist, wobei der Mantelstift (104) mit einem zylindrischen Schutzrohr (107) abgedeckt ist, wobei eine Gummibuchse (110) an dem Schutzrohr (107) zum Halten und Befestigen eines Anschlusskabels befestigt ist, das mit dem Mantelstiftkerndraht (102) elektrisch verbunden ist, und wobei der Mantelstift (104) an dem Schutzrohr (107) befestigt ist.

## Revendications

1. Structure de montage pour un capteur de température (100) destiné à détecter la température d'un fluide s'écoulant dans un tube (200), ladite structure de montage comprenant un siège de montage (201) pourvu sur ledit tube (200) et ayant une partie taraudée (202) qui y est formée pour monter ledit capteur de température (100), un organe d'étanchéité (105) relié audit capteur de température (100) et adapté pour être mis en contact avec ledit siège de montage (201) pour empêcher ainsi le fluide de s'échapper d'une partie, où ledit capteur de température (100) est inséré, vers l'extérieur et un organe de fixation (106) adapté pour être placé en raccordement par filetage avec ladite partie taraudée (202) de sorte à presser ledit organe d'étanchéité (105) contre ledit siège de montage (201),
**caractérisée en ce que**
ledit siège de montage (201), ledit organe d'étanchéité (105) et ledit organe de fixation (106) sont formés de sorte que leurs déformations thermiques deviennent essentiellement les mêmes en faisant de sorte que les coefficients d'expansion thermique linéaire dudit siège de montage (201), dudit organe d'étanchéité (105) et dudit organe de fixation (106) soient essentiellement les mêmes,
où la différence dans les coefficients d'expansion thermique linéaire dudit siège de montage (201), dudit organe d'étanchéité (105) et dudit organe de fixation (106) est de 2x10⁻⁶/ °C ou moins.

2. Structure de montage pour un capteur de température (100) selon la revendication 1, dans laquelle le fluide s'écoulant dans ledit tube (200) consiste en des gaz de refoulement déchargés depuis un moteur thermique, et dans laquelle ledit siège de montage (201), ledit organe d'étanchéité (105) et ledit organe de fixation (106) sont formés en métal.

3. Structure de montage pour un capteur de température (100) selon la revendication 2, dans laquelle ledit métal est un métal ayant des propriétés d'anti-oxydation.

4. Structure de montage pour un capteur de température (100) selon la revendication 2, dans laquelle ledit siège de montage (201), ledit organe d'étanchéité (105) et ledit organe de fixation (106) sont exposés à l'atmosphère à une température de 500°C à 700°C.

5. Structure de montage pour un capteur de température (100) selon la revendication 1, dans laquelle le fluide s'écoulant dans ledit tube (200) consiste en des gaz de refoulement déchargés depuis un moteur thermique, et dans laquelle ledit siège de montage (201) et ledit organe d'étanchéité (105) sont formés de SUS 304 (AISI 304) selon les normes industrielles japonaises (JIS) et ledit organe de fixation (106) est formé de SUS XM 7 (ASTM XM7) selon les JIS.

6. Structure de montage pour un capteur de température (100) selon la revendication 1, dans laquelle le fluide s'écoulant dans ledit tube (200) consiste en des gaz de refoulement déchargés depuis un moteur thermique, et dans laquelle ledit siège de montage (201) est formé de SUS 430, ledit organe d'étanchéité (105) est formé de SUS 430 (AISI 430) selon les JIS et ledit organe de fixation (106) est formé de SUS 430.

7. Structure de montage pour un capteur de température (100) selon la revendication 1, dans laquelle le fluide s'écoulant dans ledit tube (200) consiste en des gaz de refoulement déchargés depuis un moteur thermique, et dans laquelle ledit siège de montage (201), ledit organe d'étanchéité (105) et ledit organe de fixation (106) sont formés de SUS 410 (AISI 410) selon les JIS.

8. Structure de montage pour un capteur de température (100) selon la revendication 1, dans laquelle ledit capteur de température (100) possède une partie de détection (101) pour détecter la température, un fil central (102) à tige gainée électriquement raccordé à ladite partie de détection (101) et une tige gainée cylindrique (104) pour couvrir ledit fil central (102) à tige gainée, où ledit organe d'étanchéité (105) est relié à ladite tige gainée (104), où ladite tige gainée (104) est couverte d'un tube de protection cylindrique (107), où une douille en caoutchouc (110) est fixée audit tube de protection (107) pour supporter et fixer un fil conducteur (109) électriquement raccordé audit fil central (102) à tige gainée, et où ladite tige gainée (104) est fixée audit tube de protection (107).
